# EUROPEAN PATENT SPECIFICATION

(11) **EP 1 564 975 B1**
(45) Date of publication and mention of the grant of the patent: **15.11.2006**
(21) Application number: 04360013.9
(22) Date of filing: 12.02.2004
(51) Int. Cl.: H04M 3/42

(54) **Service request handling method and storage system**
Verfahren zur Behandelung von Dienstanforderungen und Speichersystem
Procédé pour le traitement de demandes de service et système de stockage

(43) Date of publication of application: 17.08.2005
(73) Proprietor: ALCATEL, 75008 Paris (FR)
(72) Inventor: Schmidt, Hartmut, 71723 Grossbottwar (DE)
(74) Representative: Rausch, Gabriele

(56) References cited:
- EP-A- 1 211 875
- US-A- 5 475 746
- US-A- 5 668 943
- US-A1- 2002 099 797

## Description

This invention relates to a method for handling a service request of a telecommunication system, in particular of a telecommunication switch, comprising an access of a file and a storage system comprising a telecommunication switch and a file server being designed to handle a service request of a telecommunication system according to said service request handling method.

During operation accesses to a telecommunication switch, for example the switch Alcatel 1000 S12produced by the applicant, subscriber and operator related data needs to be modified. The modification of such data (service request data) is introduced by a service request of an operator or a subscriber. Another example for a service request is the reading of stored subscriber data by an operator. The modified data requires being stored (backuped) on the local disk. This implies read and/or write accesses, which are limited due to the mechanical principle of the storage device, e.g. a hard disk, of the telecommunication switch and have to be done subsequently. Therefore, the overall time for operator commands is in a high order of magnitude. With the boost in number of subscribers, e.g. 1 million subscribers in Alcatel 1000 Softswitch produced by the applicant, the number of operator interactions, meaning service requests, will also be increased and hence the number of disk accesses.

In a known telecommunication switch as Alcatel 1000 S12, a pair of Control Elements (CE) is defined with a local disk and a mass storage service, called Peripheral and Load Control Element (PLCE). The PLCE has the function to distribute and control data and program code in the system. Usually the PLCE is the only computer having a local disk in a telecommunication switch. All CE of the system are using this pair to access the only disk in the system. Despite of loading during initiation, most disk accesses are used to backup volatile data and prevent them from power down failures. For instance, operator interventions, as an example of a service request, lead to a modification of data in various CE. All modified data will then be backuped on the disk of the PLCEs. For the reason of data safety, the operator has to wait for the completion of the disk access before he can execute the next command. In case of reading accesses the data to be read has to be accessed subsequently on the disk of the telecommunication switch. This bottleneck of the file access leads to a long reaction time of the telecommunication system. A long reaction time of the system is the result of this problems. It leads to inefficient operation interfaces and hence to high operational expenses.

Therefore in known telecommunication switches the operating software (higher layer of software) tries to avoid accesses to the disk as much as possible. This results in that the number of disk accesses can only be reduced to a minimum at a high level of research and development (R&D) costs.

US 5,475,746 discloses a telephone switch accessing and updating the subscribers configuration records in files of a remote entity. Each of the record files is maintained duplicated in two of said remote entities. In the disclosed system acknowledgement of file access is performed only after the update of the stored record, therefore delaying the sending of the acknowledgement, and consequently blocking the functioning of the switch, if any security check has to be carried out on the received subscriber data before using it to update the subscriber records.

It is therefore an object of the invention to provide a method for handling a service request of a telecommunication system and a storage system comprising a telecommunication switch for carrying out the method which overcome the problems associated with the related art.

The object concerning a method for handling a service request of a telecommunication system is attained by the method according to claim 1. The object concerning the storage system is attained by the system defined in claim 4 or claim 7.
Further advantageous features of the invention are defined in the depending claims.

By the steps of the inventive method the disk access interface of a telecommunication switch is virtualized by said file access interface (virtualized disk). The file access interface can be implemented as a software communication layer, which encapsulates the service request in a packet and transfers this data packet to the file server. The file server translates the service request into a high level file access and accesses the file where the service request data has to be stored or read. The latter in case that the service request data defines a request to read data.

The inventive method results at least in the following advantages:
- The file server can be used to ensure that no data losses will occur. Therefore the workload of the telecommunication switch itself is decreased.
- As the file server can be programmed to distribute data, especially service request data, over different storage media, the bottleneck of the access of a local disk of the telecommunication switch is removed. The file accesses need not be made subsequently.
- An improved storage access is provided. The inventive method is improving the throughput of data, resulting in the number of service requests which can be handled per time, on a lower layer, mainly at the level of disk access.
- The virtualized disk is faster due to the file caching of the file server.
- Because the sending of the request data can be carried out using common network technology, the inventive method allows to use high end computing nodes, e.g. high end IA32 or IA64 CPUs, e.g. SMP Pentium IV XEON. Furthermore, the inventive method allows to use faster network technology, e.g. Gigabit Ethernet or 10 Gigabit Ethernet.
- Write accesses can be improved, since the access time is related to disk seek, which depends on the used disk mechanics, and not necessarily on the electrical disk interface.
- The disk access only requires additional communication stacks. In case of read accesses, only the communication time has to be added on top of the disk access time. Because of the fact that file caching usually can be applied on the file server, the disk access time for the client will be lower than in systems according to the state of the art. In future times the average disk access time is expected to be lower than today. This can also be influenced by the size of the file server cache or the size of its main memory.

Preferably, said service request data is being composed by encapsulating the data of a plurality of service requests into a data packet. Therefore, communication time can be decreased. If, for example, the service request data of the plurality of service requests belong together it can be advantageous to submit them by sending them in a data packet. Furthermore, this preferred embodiment allows to combine the advantages of the inventive method with existing software which avoids disk accesses.

Advantageously, said service request data is comprising subscriber and/or operator data of said telecommunication system, in particular of said telecommunication switch and the accessing of said file is comprising a storing of said service request data on said storage media of said file server. By applying the inventive method in this advantageous way, data safety problems of existing telecommunication switches are solved because existing standard technologies to avoid data losses of a file server can be used in connection with increased safety requests of the storage of telecommunication subscriber and/or operator data. As soon as the storage of telecommunication subscriber and/or operator data is acknowledged to the operator who has created a service request it has to be sure that no data losses can occur anymore to this data (Single-Point-of-Failure). This can be guaranteed by the file server, without the need of waiting until the service request data is written on a single disk.

If the accessing of the file is comprising a storing of service request data on a storage media of a first file server it is advantageous if said service request data is being duplicated by said telecommunication system, preferably said telecommunication switch and sent to a second file server and the second file server is storing said service request data on a storage media of said second file server. To store the service request data on storage media of two different file servers is the easiest and safest way to avoid data losses in case of a fail- /ure of one server or another component of the inventive telecommunication system. For redundancy reason, the service request and a corresponding file access is duplicated using a second file server. Therefore the information of the stored service request data is duplicated over two independent disks. In this way soft Redundant Array of Independent/Inexpensive Disks (RAID) is implemented. In case of a failure of one of the file servers, the stored files need to be synchronized after the failed server becomes operational again. This implies inconsistencies for only a short period of time, which has to be addressed by a communication between the file servers, e.g. file access logging during the absence of one server.
Thus, it is preferred that said storing of said service request data is logged until both of said file servers have acknowledged the file access of said service requests.

The inventive storage system is comprising a telecommunication switch and at least one file server as defined in claim 4.

Preferably, said telecommunication switch is comprising encapsulating means, being designed to compose said service request data by encapsulating the data of a plurality of service requests into a data packet. Therefore, the advantages of an encapsulation of the data of a plurality of service requests as explained above is achieved.

Preferably, said file server and said telecommunication switch are connected by an Ethernet network and the sending means are designed to send said service request data via said Ethernet network and/or said storage media is comprising a hard disk. In known telecommunication switches the stored service request data can be accessed with 5 MB/s (megabyte per second). If an Ethernet network is used to submit the service request data from the telecommunication switch to the file server, which receives the data, the stored service request data can be accessed with 100 MB/s Ethernet. To use a hard disk for the storage of the service request data is a safe and cheap method for mass data storage.

In another embodiment of the invention, a storage system comprises a telecommunication switch and a file server as defined in claim 7. To implement the inventive method as a computer program is the most appropriate way to achieve the advantages of the inventive method.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.
In fig. 1 the inventive method is described in a message flow scenario for a redundant disk write access to two file servers.
In fig. 2 the topology of an inventive storage system is shown as a system overview.
In fig. 3 an example of an encapsulation of different service requests is shown. In fig. 4 the simultaneous access to both file servers as shown in figure 2 is illustrated.
In fig. 5 a redundant file access mapping is shown as used in both file servers as shown in figure 4.

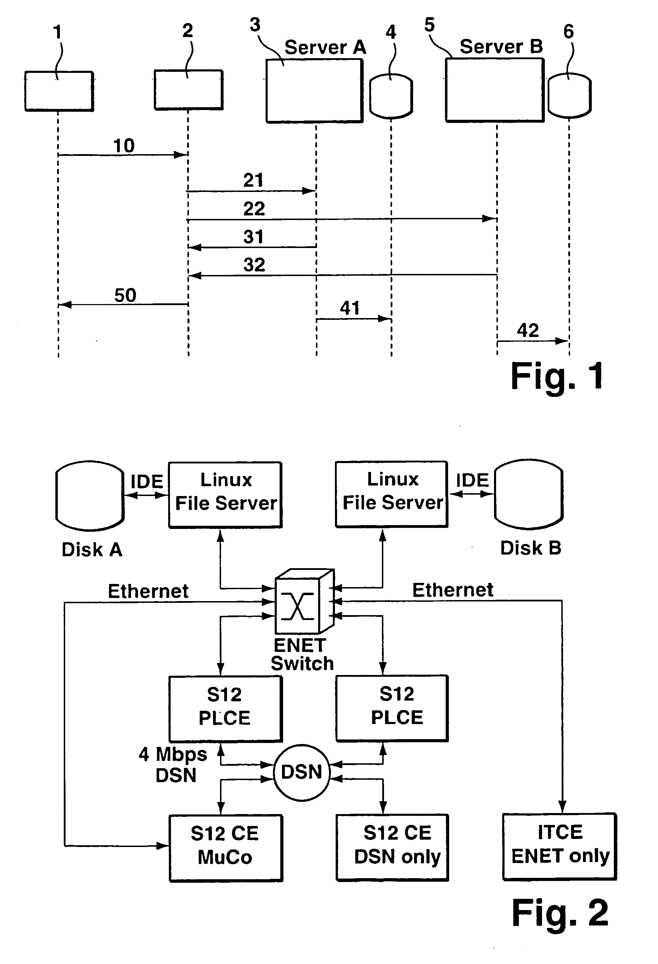

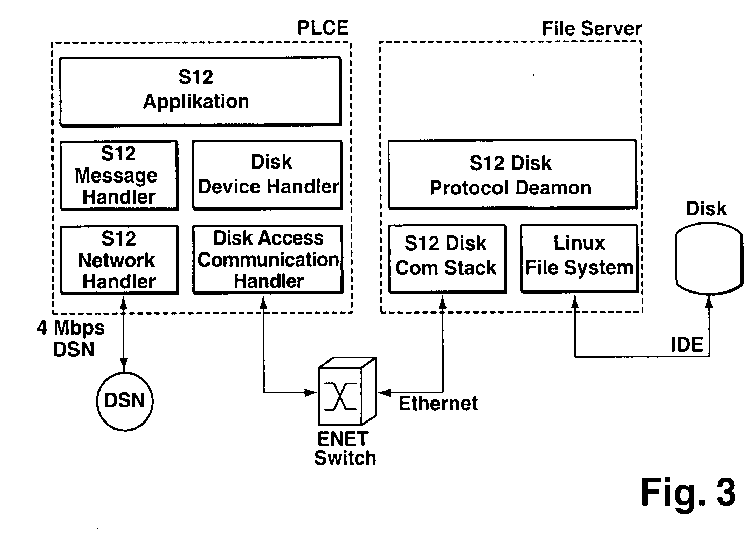

In fig. 1 the inventive method is described in a message flow scenario for a redundant disk write access to two file servers: server A 3 and server B 5, each having one hard disk 4,6. The telecommunication switch is shown as a system comprising a client 1 and a PLCE 2. Both servers can, for example, be organized as shown in figure 3.
The inventive method for fast storing subscriber data and operator data of a telecommunication system, in particular of a telecommunication switch is comprising the steps described in the following.
First, a service request comprising subscriber and/or operator data of the telecommunication switch to be stored is generated. This results in a write file request 10 transmitted from the client 1 to the PLCE. Service request data is transmitted to a file access interface located in the PLCE, which is part of a telecommunication switch. The data of the service request is encapsulated in a packet and transmitted, i.e. sent and received, to the first file server 3, meaning a write file request 21 to the file server, comprising a data block to be written, is transmitted. The service request data is duplicated and the duplicated data is transmitted, i.e. sent and received, to the second file server 5, meaning a write file request 22 to the file server, comprising a data block to be written, is transmitted. The service request data is translated into a file access by both servers. That results in writing 41,42 a data block to the disc 4 and 6. The subscriber and/or operator data of the service request is stored at a storage media, e.g. a hard disc 4,6, of the different file servers. The writing of the service request data is acknowledged 31,32 by the file servers 3,5 to the PLCE of the telecommunication switch. Furthermore, there is an acknowledgement of the file writing from the PLCE 2 to the client 1. This is a potential scenario for a packet flow in case of a disk write access, e.g. write a 2 Kbytes block to disk. The PLCE duplicates the write access over both file servers. Each server acknowledges the write access immediately. The final disk access is executed delayed (file caching).

In fig. 2 the topology of an inventive storage system is shown as a system overview. It shows the overall system overview with all relevant components. In the example shown the file servers are Linux file servers, each connected by an Integrated Drive Electronics (IDE) to a hard disk (Disk A and Disk B). The Ethernet switch (ENET Switch) is controlled by an Information Technology Control Element (ITCE ENET only). Furthermore, the PLCEs (S12 PLCE) are connected to a Multi Connectivity (MuCo) element, which is able to work with different communication paths and a Digital Switched Network (DSN). In the figure the two communication paths are Digital Switched Network and Ethernet. There is no local disk at both PLCEs (S12 PLCE) as shown. The telecommunication storage area network as shown represents the network topology used by the telecommunication switch Alcatel 1000512 of the applicant. In the system the S12 Hard Disk and Archive Facilities of S12 PLCE are depopulated. The S12 storage is migrated with a Linux server platform. This results in an improved file access performance for a higher data throughput. If an efficient access interface for Linux native applications is provided, a fast active / standby synchronization is possible. According to the invention, the local disk of a PLCE as known is removed. A file server provides the disk storage service. Ethernet networks maintain communication between PLCE and file server.

In fig. 3 an example of an encapsulation of different service requests is shown. The disk accesses of the control units are virtualized at a lower software layer. Service requests are transported in packets to a file server. Here, the request will be processed by a daemon and in general lead to a file read or write access. The file reflects a virtual disk. Each access to a 2kByte sized block No. x will lead to a file access with a displacement of x * 2 Kbytes. Figure 3 shows the file mapping in a file server for two PLCEs. A lower software layer, called Disk Access Communication Handler, underneath the existing Disk Device Handler performs the disk visualization. Disk read and write accesses lead to message based communication with the file servers. The file servers provide proprietary communication stacks. A Disk Protocol Daemon translates the service request into a service request towards his own file system. For instance, the virtualized disk can be organized in a very large file, which reflects the block wise organization of the original disk. The advantageous benefits of a file caching helps to improve the disk accesses, in particular for read access requests.

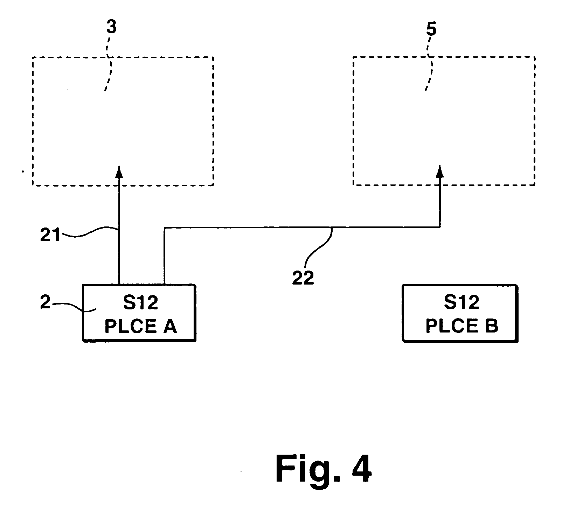

In fig. 4 the simultaneous access to both file servers 3,5 as shown in figure 2 is illustrated. On both file servers 3,5 a write block is stored simultaneously. The service request data is duplicated by a telecommunication switch 2 and transmitted to the file servers 3,5 as write data block requests 21, 22. This avoids the existence of single point of failures.

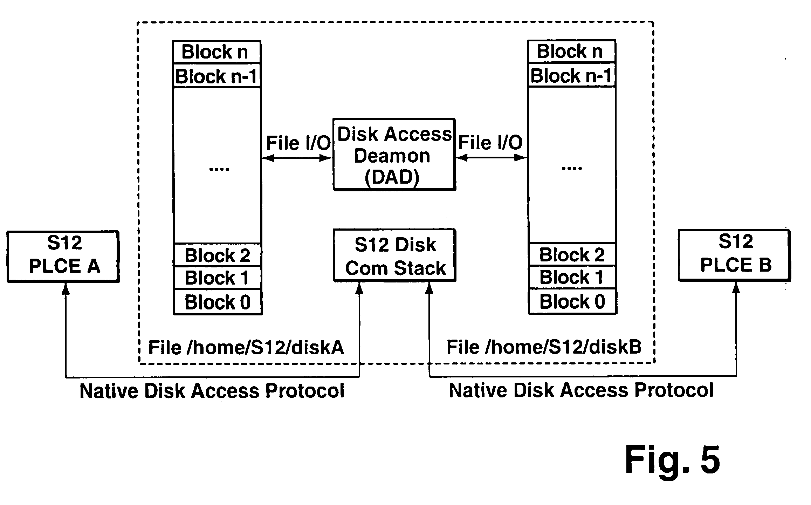

In fig. 5 a redundant file access mapping is shown as used in both file servers as shown in figure 4. Since the file server is a single point of failure, a second file server will provide redundancy. Therefore, write accesses need to be duplicated over both servers, as shown in figure 4. Read accesses can be maintained by a single file server by the active node. In case a server fails, the other one will continue the service. A takeover of the active function by the standby server might occur, if the active one fails. The file server, symbolized in figure 5 as the rectangular drawn in dotted lines, can be shared by both PLCEs (PLCE A, PLCE B). This avoids the requirement for four physical disks, because a single disk of a PLCE, according to the state of the art, in this invention is virtualized by two file servers with each having an attached physical disk. Since also the PLCEs are duplicated in Alcatel 1000 S12, in total, four virtualized disks are defined. As shown in figure 5, both PLCEs can perform read and write accesses independently with the same file server, by sharing the same physical equipment. Figure 5 also shows the block wise organization of the file. Each read and write access to a certain block is translated into a displacement in the file by multiplying its block number with the size of a block.

## Claims

1. A method for handling a service request of a telecommunication switch comprising an access of a file, comprising the steps of:
- transmitting service request data to a file access interface of said telecommunication switch, the service request data specifying said file access,
- sending (21) said service request data from said file access interface to a file server (3),
- translating the service request data into a file access by said file server (3),
- accessing said file on a storage media (4) of said file server (3),
- acknowledging (31) the file access of said service request by said file server (3) to said telecommunication switch, wherein said service request data is comprising subscriber and/or operator data of said telecommunication switch and the accessing of said file is comprising a storing (41) of said service request data on said storage media (4) of said file server (3), **characterised in that** said service request data is being duplicated by said telecommunication switch and sent (22) to a second file server (5) and the second file server (5) is storing (42) said service request data on a storage media (6) of said second file server (5) and each file server (3, 5) acknowledges (31, 32) the write access of said storing before the final write access at its storage media (4, 6) is executed.

2. The method according to claim 1, **characterised in that** said service request data is being composed by encapsulating the data of a plurality of service requests into a data packet.

3. The method according to claim 1, **characterised in that** said storing of said service request data is logged until both of said file servers have acknowledged the file access of said service requests.

4. A storage system comprising a telecommunication switch and a file server (3), the telecommunication switch comprising
- file access interface means comprising sending means, being designed to send service request data from said file access interface means to said file server (3), the service request data specifying a write access of a file,
- transmitting means, being designed to transmit said service request data, to said file access interface means, and
the file server (3) comprising
- a storage media (4),
- translating means, being designed to translate the service request data into a file access,
- accessing means, being designed to access said file on said storage media (4),
- acknowledging means, being designed to acknowledge said file access of said service request to said telecommunication switch,
**characterised in that** the system is comprising a second file server (5) and said telecommunication switch is comprising duplication means, being designed to duplicate said service request data and said sending means are designed to send the duplicated service request data to said second file server (5); and each file server (3, 5) is adapted to acknowledge the write access before the final write access at its storage media (4, 6) is executed .

5. The storage system according to claim 4, **characterised in that** said telecommunication switch is comprising encapsulating means, being designed to compose said service request data by encapsulating the data of a plurality of service requests into a data packet.

6. The storage system according to claim 4, **characterised in that** said file server and said telecommunication switch are connected by an Ethernet network and the sending means are designed to send said service request data via said Ethernet network and/or said storage media is comprising a hard disk.

7. A storage system comprising a telecommunication switch and a file server adapted to carry out the steps of the method of claim 1, wherein at least one of them, preferably both, comprises at least one microcomputer loaded with a computer program with software code sections by which the steps of the method are carried out.

## Patentansprüche

1. Verfahren zur Bearbeitung einer Dienstanforderung einer Fernmeldevermittlungsstelle mit Dateizugriff, das folgende Schritte umfasst:
- Übertragen von Dienstanforderungsdaten zu einer Dateizugriffsschnittstelle der Fernmeldevermittlungsstelle, wobei die Dienstanforderungsdaten den Dateizugriff angeben,
- Senden (21) der Dienstanforderungsdaten von der Dateizugriffsschnittstelle zu einem Dateiserver (3),
- Umsetzen der Dienstanforderungsdaten in einen Dateizugriff durch den Dateiserver (3),
- Zugreifen auf die Datei auf einem Speichermedium (4) des Dateiservers (3),
- Bestätigen (31) des Dateizugriffs der Dienstanforderung durch den Dateiserver (3) an die Fernmeldevermittlungsstelle, wobei die Dienstanforderungsdaten Teilnehmer- und/oder Bedienerdaten der Fernmeldevermittlungsstelle umfassen und das Zugreifen auf die Datei eine Speicherung (41) der Dienstanforderungsdaten auf dem Speichermedium (4) des Dateiservers (3) umfasst,
**dadurch gekennzeichnet, dass** die Dienstanforderungsdaten durch die Fernmeldevermittlungsstelle dupliziert und zu einem zweiten Dateiserver (5) gesendet werden (22), dass der zweite Dateiserver (5) die Dienstanforderungsdaten auf einem Speichermedium (6) des zweiten Dateiservers (5) speichert und dass jeder Dateiserver (3, 5) den Schreibzugriff der Speicherung bestätigt (31, 32), bevor der endgültige Schreibzugriff auf seinem Speichermedium (4, 6) durchgeführt wird.

2. Verfahren nach Anspruch 1, **dadurch gekennzeichnet, dass** die Dienstanforderungsdaten **dadurch** zusammengestellt werden, dass die Daten einer Vielzahl von Dienstanforderungen in einem Datenpaket gekapselt werden.

3. Verfahren nach Anspruch 1, **dadurch gekennzeichnet, dass** die Speicherung der Dienstanforderungsdaten protokolliert wird, bis jeder der beiden Dateiserver den Dateizugriff der Dienstanforderung bestätigt hat.

4. Speichersystem mit einer Fernmeldevermittlungsstelle und einem Dateiserver (3),
wobei die Fernmeldevermittlungsstelle folgende Teile umfasst:
- Dateizugriffsschnittstellenmittel mit Sendemitteln zum Senden von Dienstanforderungsdaten von den Dateizugriffsschnittstellenmitteln zum Dateiserver (3), wobei die Dienstanforderungsdaten den Schreibzugriff auf eine Datei angeben,
- Übertragungsmittel zum Übertragen der Dienstanforderungsdaten zu den Dateizugriffsschnittstellenmitteln, und wobei der Dateiserver (3) folgende Teile umfasst:
- eine Speichermedium (4),
- Umsetzungsmittel zum Umsetzen der Dienstanforderungsdaten in einen Dateizugriff,
- Zugriffsmittel zum Zugreifen auf die Datei auf dem Speichermedium (4),
- Bestätigungsmittel zum Bestätigen des Dateizugriffs der Dienstanforderung an die Fernmeldevermittlungsstelle,
**dadurch gekennzeichnet, dass** das System einen zweiten Dateiserver (5) umfasst, dass die Fernmeldevermittlungsstelle Dupliziermittel zum Duplizieren der Dienstanforderungsdaten umfasst, dass die Sendemittel geeignet sind, die duplizierten Dienstanforderungsdaten zum zweiten Dateiserver (5) zu senden und dass jeder Dateiserver (3, 5) geeignet ist, den Schreibzugriff zu bestätigen, bevor der endgültige Schreibzugriff auf seinem Speichermedium (4, 6) durchgeführt wird.

5. Speichersystem nach Anspruch 4, **dadurch gekennzeichnet, dass** die Fernmeldevermittlungsstelle Verkapselungsmittel umfasst, die geeignet sind, die Dienstanforderungsdaten **dadurch** zusammenzustellen, dass sie die Daten einer Vielzahl von Dienstanforderungen in einem Datenpaket kapseln.

6. Speichersystem nach Anspruch 4, **dadurch gekennzeichnet, dass** der Dateiserver und die Fernmeldevermittlungsstelle durch ein Ethernet verbunden sind und die Sendemittel geeignet sind, die Dienstanforderungsdaten über das Ethernet zu senden, und/oder dass das Speichermedium eine Festplatte umfasst.

7. Speichersystem mit einer Fernmeldevermittlungsstelle und einem Dateiserver, die geeignet sind, die Schritte des Verfahrens gemäß Anspruch 1 durchzuführen, wobei mindestens einer von ihnen, vorzugsweise beide, mindestens einen Mikrocomputer umfasst beziehungsweise umfassen, der mit einem Computerprogramm mit Programmbereichen geladen ist, durch welche die Schritte des Verfahrens durchgeführt werden.

## Revendications

1. Procédé pour traiter une demande de service d'un commutateur de télécommunication comprenant un accès à un fichier, comprenant les étapes suivantes :
- Transmission des données de demande de service à une interface d'accès au fichier dudit commutateur de télécommunication, les données de demande de service spécifiant ledit accès au fichier,
- Émission (21) des dites données de demande de service de ladite interface d'accès au fichier à un serveur de fichiers (3),
- Conversion des données de demande de service en un accès au fichier par ledit serveur de fichiers (3),
- Accès audit fichier sur un support de stockage (4) dudit serveur de fichiers (3),
- Confirmation (31) de l'accès au fichier de ladite demande de service par ledit serveur de fichiers (3) audit commutateur de télécommunication, dans lequel lesdites données de demande de service comprennent des données d'abonné et/ou d'opérateur dudit commutateur de télécommunication et l'accès audit fichier comprend un stockage (41) des dites données de demande de service sur ledit support de stockage (4) dudit serveur de fichiers (3), **caractérisé en ce que** lesdites données de demande de service sont dupliquées par ledit commutateur de télécommunication et envoyées (22) à un deuxième serveur de fichiers (5) et le deuxième serveur de fichiers (5) stocke (42) lesdites données de demande de service sur un support de stockage (6) dudit deuxième serveur de fichiers (5) et chaque serveur (3, 5) confirme (31, 32) l'accès en écriture dudit fichier de stockage avant que l'accès en écriture final de son support de stockage (4, 6) soit exécuté.

2. Procédé selon la revendication 1, **caractérisé en ce que** lesdites données de demande de service sont composées en encapsulant les données d'une pluralité de demandes de service en un paquet de données.

3. Procédé selon la revendication 1, **caractérisé en ce que** ledit stockage des dites données de demande de service est enregistré jusqu'à ce les deux dits serveurs de fichiers aient confirmé l'accès au fichier des dites demandes de service.

4. Système de stockage comprenant un commutateur de télécommunication et un serveur de fichiers (3), le commutateur de communication comprenant
- des moyens d'interface d'accès au fichier comprenant des moyens d'émission conçus pour envoyer des données de demande de service depuis lesdits moyens d'interface d'accès au fichier vers ledit serveur de fichiers (3), les données de demande de service spécifiant un accès en écriture à un fichier,
- des moyens de transmission conçus pour transmettre lesdites données de demande de service aux dits moyens d'interface d'accès au fichier et le serveur de fichiers (3) comprenant
- un support de stockage (4),
- des moyens de conversion conçus pour convertir les données de demande de service en un accès au fichier,
- des moyens d'accès conçus pour accéder audit fichier sur ledit support de stockage (4)
- des moyens de confirmation conçus pour confirmer ledit accès au fichier de ladite demande de service audit commutateur de télécommunication, **caractérisé en ce que** le système comprend un deuxième serveur de fichiers (5) et ledit commutateur de télécommunication comprend des moyens de duplication conçus pour dupliquer lesdites données de demande de service et lesdits moyens sont conçus pour envoyer les données de demande de service dupliquées audit deuxième serveur de fichiers (5) et chaque serveur de fichiers (3, 5) est conçu pour confirmer l'accès en écriture avant que l'accès en écriture final de son support de stockage (4, 6) soit exécuté.

5. Système de stockage selon la revendication 4, **caractérisé en ce que** ledit commutateur de télécommunication comprend des moyens d'encapsulation conçus pour composer lesdites données de demande de service en encapsulant les données d'une pluralité de demandes de service en un paquet de données.

6. Système de stockage selon la revendication 4, **caractérisé en ce que** ledit serveur de fichiers et ledit commutateur de télécommunication sont connectés par un réseau Ethernet et les moyens d'émission sont conçus pour envoyer lesdites données de demande de service par le biais dudit réseau Ethernet et/ou ledit support de stockage comprend un disque dur.

7. Système de stockage comprenant un serveur de fichiers et un commutateur de télécommunication conçus pour exécuter les étapes du procédé de la revendication 1, dans lequel au moins l'un d'eux, de préférence les deux, comprend au moins un microordinateur dans lequel est chargé un programme informatique avec des sections de code logiciel avec lesquelles sont exécutées les étapes du procédé.
